# EUROPÄISCHE PATENTSCHRIFT

(11) **EP 3 987 549 B1**
(45) Veröffentlichungstag und Bekanntmachung des Hinweises auf die Patenterteilung: **13.03.2024**
(21) Anmeldenummer: 21742095.9
(22) Anmeldetag: 06.07.2021
(51) Int. Cl.: G21C 19/20, G21D 1/00, G21F 9/28, G21F 9/30

(54) **ANORDNUNG UND VERFAHREN ZUM ZERLEGEN EINES BEHÄLTERS**
ARRANGEMENT AND METHOD FOR DISMANTLING A CONTAINER
SYSTÈME ET PROCÉDÉ POUR DÉMANTELER UN CONTENEUR

(30) Priorität: 16.07.2020 DE 102020118889; 02.10.2020 DE 102020125867
(43) Veröffentlichungstag der Anmeldung: 27.04.2022
(73) Patentinhaber: Siempelkamp NIS Ingenieurgesellschaft mbH, 63755 Alzenau (DE)
(72) Erfinder: DÄTIG, Stefan, Dipl.-Ing., 97786 Motten (DE); LOEB, Andreas, Dipl.-Ing., 61194 Niddatal (DE)
(74) Vertreter: Stoffregen, Hans-Herbert
(86) Internationale Anmeldenummer: PCT/EP2021/068581
(87) Internationale Veröffentlichungsnummer: WO 2022/012998

(56) Entgegenhaltungen:
- JP-A- 2012 093 181
- US-A- 5 001 870

## Beschreibung

Die Erfindung bezieht sich auf eine Anordnung zum Zerlegen eines eine Umfangswandung und eine von dieser umgebene Öffnung aufweisenden Behälters, insbesondere einer kerntechnischen Anlage, vorzugsweise Reaktordruckbehälter, mit oberhalb der Öffnung angeordneter Abschirmabdeckung sowie Zerlegewerkzeug zum Schneiden von Segmenten aus der Umfangswandung, wobei die Zerlegung derart erfolgt, dass sukzessiv eine Hohlzylinderringgeometrie aufweisende Bereiche der Umfangswandung in Segmente geschnitten und diese sodann entfernt werden, wobei nach Entfernen eines segmentierten die Hohlzylinderringgeometrie aufweisenden Bereichs ein Stirnrand der verbleibenden Umfangswandung zur Verfügung steht.

Auch nimmt die Erfindung Bezug auf ein Verfahren zum Zerlegen eines eine Umfangswandung und eine von dieser umgebene Öffnung aufweisenden Behälters, insbesondere einer kerntechnischen Anlage, vorzugsweise Reaktordruckbehälter, mit oberhalb der Öffnung angeordneter Abschirmabdeckung sowie Zerlegewerkzeug zum Schneiden von Segmenten aus der Umfangswandung, wobei die Zerlegung derart erfolgt, dass sukzessiv eine Hohlzylinderringgeometrie aufweisende Bereiche der Umfangswandung in Segmente geschnitten und diese sodann entfernt werden, wobei nach Entfernen eines segmentierten die Hohlzylinderringgeometrie aufweisenden Bereichs ein Stirnrand der verbleibenden Umfangswandung zur Verfügung steht.

Eine entsprechende Anordnung bzw. ein diesbezügliches Verfahren wird in der Praxis zum Rückbau von Reaktordruckbehältern eingesetzt.

Bei Rückbau von kerntechnischen Anlagen bereitet es insbesondere einen erheblichen Aufwand, Behälter, wie Reaktordruckbehälter o.ä., zu zerlegen und zu entfernen. Dabei muss aufgrund der hohen Radioaktivität darauf geachtet werden, dass eine Kontaminationsausbreitung aus dem Inneren des zu zerlegenden Behälters in umliegende Bereiche vermieden sowie die Umgebung vor der radioaktiven Strahlung aus dem Inneren des Reaktordruckbehälters abgeschirmt wird.

Entsprechende Behälter befinden sich üblicherweise in einer Grube, die kopfseitig eingehaust ist, um eine lufttechnische Konditionierung zu ermöglichen. Dabei wird ein Unterdruck eingestellt, um austretende Kontamination zurückhalten zu können.

Da entsprechende Behälter überaus schwer sind, bereitet es häufig Probleme, diese als Einheit zu entfernen. Hierzu ist es zudem erforderlich, dass aufgrund des hohen Gewichts des Behälters die Einhausung entfernt wird, um die in der kerntechnischen Anlage vorhandenen Hebewerkzeuge nutzen zu können.

Will man diese Nachteile vermeiden, befindet sich in der Einhausung ein Hebewerkzeug, mittels dessen Teile, also Segmente des zerlegten Behälters angehoben werden, um sodann an eine weitere Bearbeitungsstation übergeben zu werden.

Nachteilig bei dieser Verfahrensweise ist, dass beim Entfernen von Segmenten die Abschirmabdeckung wie -platte von dem in der Einhausung vorhandenen Hebewerkzeug gehalten werden muss, so dass dem Grunde nach mehrere Hebewerkzeuge erforderlich sind, um die Segmente zu entfernen und gleichzeitig die Abschirmabdeckung zu halten.

Der JP 2012-093 181 A ist eine Vorrichtung zum Zerlegen von Behältern zu entnehmen. Hierzu wird eine zylindrische Abschirmung benutzt, die die Abschirmung des Behälters umgibt und von der Zerlegewerkzeuge und Hebevorrichtungen zum Entfernen geschnittener Segmente ausgehen.

Der US 5,001,870 A ist ein Verfahren zum Zerlegen eines Behälters zu entnehmen, wobei in der Behälterwandung Axial- und Horizontalschnitte durchgeführt werden, um zu entfernende Segmente auszuschneiden.

Aufgabe der vorliegenden Erfindung ist es, eine Anordnung und ein Verfahren der eingangs genannten Art so weiterzubilden, dass mit konstruktiv einfachen Maßnahmen ein Zerlegen eines Behälters erfolgen kann.

Anordnungsgemäß wird die Aufgabe im Wesentlichen dadurch gelöst, dass die Abschirmabdeckung eine Absenkeinrichtung zum sukzessiven Absenken der Abschirmabdeckung auf den jeweiligen zur Verfügung stehenden Stirnrand aufweist.

Es wird ein autarkes System zur Verfügung gestellt, mittels dessen die Abschirmabdeckung zu dem Behälter ausgerichtet werden kann, ohne dass es eines gesonderten Hebewerkzeugs bedarf. Vielmehr wird die mit der Abschirmabdeckung integrierte Absenkeinrichtung verwendet, die sich im erforderlichen Umfang an Stirnrändern des Behälters abstützen kann, um somit die Abschirmabdeckung im gewünschten Umfang absenken zu können.

Hierzu ist insbesondere vorgesehen, dass die Absenkeinrichtung zumindest zwei Auflager, vorzugsweise drei um 120° versetzt zueinander angeordnete Auflager, aufweist, über die die Abschirmabdeckung abstützbar ist.

Dabei sollten die Auflager endseitige Abschnitte einer Traverse sein, die über zumindest einen Verstell- wie Hebemechanismus, wie Zylinder, Spindel, Seilwinde, zu der Abschirmabdeckung verstellbar ist.

Verstellmechanismus mit den Auflagern bilden die Absenkeinrichtung bzw. sind Teil dieser.

Um ein problemloses Zerlegen zu ermöglichen, sieht die Erfindung in eigenerfinderischer Weiterbildung vor, dass auf der Außenseite der Abschirmabdeckung ein drehbar zu der Abschirmabdeckung die Geometrie eines Kreisrings oder Kreisringabschnitts aufweisendes Scheibenelement angeordnet ist, von dem das Zerlegewerkzeug ausgeht.

Insbesondere und gleichfalls eigenerfinderisch ist vorgesehen, dass das als Ringscheibe zu bezeichnende Scheibenelement einen Ausschnitt aufweist, dessen in Kreisumfangsrichtung verlaufende Erstreckung größer als Erstreckung eines Segments in Kreisumfangsrichtung ist.

Die radiale Erstreckung des Ausschnitts sollte zumindest gleich oder zumindest in etwa gleich radialer Erstreckung des Scheibenelements außerhalb der Abschirmabdeckung sein.

Die Abschirmabdeckung weist eine Kreisscheibengeometrie auf, über deren Umfangsrand radial vorstehend das Scheibenelement verläuft.

Insbesondere ist der Durchmesser der Abschirmabdeckung kleiner als der Innendurchmesser des Behälters. Ungeachtet dessen ist jedoch nur ein geringer Freiraum zwischen Behälterinnerem und der Umgebung, in der sich der Behälter befindet, gegeben, nämlich nur ein Spalt zwischen dem Ausschnitt der Ringscheibe und dem Rand des Behälters bzw. dessen Umfangswandung; denn ansonsten wird der Zwischenraum zwischen Abschirmabdeckung und Behälter durch das als Ringscheibe zu bezeichnende Scheibenelement abgedeckt, von dem das Zerlegewerkzeug ausgeht.

Dabei ist insbesondere vorgesehen, dass entlang innerer Begrenzung des Ausschnitts ein Träger für das Zerlegewerkzeug verläuft.

Da die Erstreckung des Ausschnitts größer als Erstreckung eines Segments ist bzw. in Abhängigkeit von der Erstreckung des Ausschnitts ein Segment geschnitten wird, kann ein problemloses Durchtrennen der Umfangswandung erfolgen, wobei das Zerlegewerkzeug in X-, Y-, Z-Richtung verstellbar ist, so dass im erforderlichen Umfang axial und radial sowie in Umfangsrichtung verlaufende Schnitte durchgeführt werden, die die Segmente begrenzen.

Durch den Ausschnitt hindurch wird auch ein Segment angehoben.

Bei dem Zerlegewerkzeug kann es sich um ein mechanisch und/oder thermisch arbeitendes Zerlegewerkzeug handeln. Beispielhaft ist ein Autogenschneidwerkzeug, ein Plasmaschneidwerkzeug, ein spanabhebendes Werkzeug zu nennen.

Durch Drehen der Ringscheibe, von dem das Zerlegewerkzeug ausgeht, kann dieses auf gewünschte Bereiche der Umfangswandung des Behälters ausgerichtet werden und somit die erforderlichen Schnitte durchführen.

Dabei ist insbesondere vorgesehen, dass das Scheibenelement gegenüber der Abschirmabdeckung über eine drehbare Lagerung abgestützt ist.

Die Erfindung zeichnet sich auch aus durch ein Verfahren zum Zerlegen eines eine Umfangswandung und eine von dieser umgebene Öffnung aufweisenden Behälters, insbesondere einer kerntechnischen Anlage, insbesondere Reaktordruckbehälter, mit oberhalb der Öffnung angeordneter Abschirmabdeckung sowie Zerlegewerkzeug zum Schneiden von Segmenten aus der Umfangswandung, wobei die Zerlegung derart erfolgt, dass sukzessiv eine Hohlzylinderringgeometrie aufweisende Bereiche der Umfangswandung in Segmente geschnitten und diese sodann entfernt werden, wobei nach Entfernen eines segmentierten die Hohlzylinderringgeometrie aufweisenden Bereichs ein Stirnrand der verbleibenden Umfangswandung zur Verfügung steht, umfassend die Verfahrensschritte:
- Schneiden von Segmenten bei auf der Öffnung angeordneter Abschirmabdeckung eines ersten eine Hohlzylinderringgeometrie aufweisenden Bereichs derart, dass zwischen Segmenten in Längsrichtung des Behälters verlaufende Vertikal- oder Längstrennschnitte und mit Ausnahme für zumindest zwei Stützsegmente bildende Segmente bodenseitig verlaufende Horizontal- oder Bodentrennschnitte ausgebildet werden,
- Entfernen der von Vertikal- oder Längs- und Horizontal- oder Bodentrennschnitten begrenzten Segmente bei bleibender Abstützung der Abschirmabdeckung auf den zumindest zwei verbleibenden Stützsegmenten,
- Abstützen der Abschirmabdeckung auf den durch das Entfernen der Segmente gebildeten Stirnrand der Umfangswandung mittels von der Abschirmabdeckung ausgehender Absenkeinrichtung,
- Ausbilden von Horizontal- oder Bodentrennschnitten in den verbliebenen zumindest zwei Stützsegmenten,
- Entfernen der Stützsegmente und
- Absenken der Abschirmabdeckung mittels der Absenkeinrichtung auf den Stirnrand.

Dabei ist insbesondere vorgesehen, dass zur Ausbildung der Segmente zunächst Vertikal- oder Längstrennschnitte und/oder Horizontal- oder Bodentrennschnitte teilweise durchgeführt und anschließend verbleibende Bereiche zwischen den Segmenten und der Umfangswandung durchtrennt werden.

Bevorzugterweise sollten die verbleibenden Bereiche in Eckbereichen der zu schneidenden Segmente vorgesehen sein.

Zum Entfernen der Segmente ist es nur erforderlich, dass diese zunächst in einem Umfang radial zu dem Behälter bewegt werden, der dem Kontaktbereich zwischen Absenkeinrichtung und Rand des Behälters entspricht. Sodann kann ein Anheben der Segmente entlang Längsachse des Behälters erfolgen. Folglich ist nur ein geringer Raumbedarf zwischen Behälter und diesen umgebender Abschirmung erforderlich, um die Segmente zu entfernen.

Zum Entfernen eines Segments wird der Ausschnitt der Ringscheibe auf das Segment derart ausgerichtet, dass das Segment durch den Ausschnitt angehoben werden kann.

Weitere Einzelheiten, Vorteile und Merkmale der Erfindung ergeben sich nicht nur aus den Ansprüchen, den diesen zu entnehmenden Merkmalen - für sich und/oder im Kombination -, sondern auch aus der nachfolgenden Beschreibung eines der Zeichnung zu entnehmenden bevorzugten Ausführungsbeispiels.

Es zeigen:
- Fig. 1: einen Ausschnitt eines Behälters in Prinzipdarstellung,
- Fig. 2: der Behälter gemäß Fig. 1 nach Durchführung eines Längstrennschnitts,
- Fig. 3: der Behälter nach Fig. 2 nach Durchführung eines Bodentrennschnitts,
- Fig. 4: der Behälter nach den Fig. 1 bis 3 nach Durchführung einer Vielzahl von Längs- und Bodentrennschnitten,
- Fig. 5: der Behälter nach den Fig. 1 bis 4 nach Entfernen von Segmenten bei verbliebenen Stützsegmenten,
- Fig. 6: der Behälter nach den Fig. 1 bis 5 mit abgesenkter Absenkeinrichtung,
- Fig. 7: der Behälter nach den Fig. 1 bis 6 nach Entfernen von Stützsegmenten und
- Fig. 8: der Behälter nach den Fig. 1 bis 7 bei auf einen Behälterrand abgesenkter Abschirmplatte.

Anhand der Figuren soll die erfindungsgemäße Lehre zum Zerlegen eines Behälters 10 erläutert werden, bei dem es sich insbesondere um einen Reaktordruckbehälter handelt, der in einem Kernkraftwerk eingesetzt wird. Entsprechende Behälter befinden sich üblicherweise in einer Grube, die öffnungsseitig von einer Abschirmplatte abgeschirmt ist, die gegebenenfalls unmittelbar auf der kopfseitigen Öffnung des eine Zylinderform aufweisenden Behälters angeordnet sein kann.

Die Erfindung wird jedoch nicht auf Reaktordruckbehälter eingeschränkt.

Die Grube selbst ist lufttechnisch eingehaust, wobei ein Unterdruck erzeugt wird, um eine Ausbreitung von Kontamination im Reaktorgebäude zu vermeiden. In der lufttechnischen Einhausung kann auch z.B. eine Verpackungsstation vorgesehen sein.

Innerhalb der lufttechnischen Einhausung ist des Weiteren ein Hebewerkzeug, wie Kran, vorhanden, um aus dem Behälter ausgeschnittene Segmente anheben zu können, so dass die vorhandenen Hebewerkzeuge außerhalb der Einhausung selbst nicht benutzt werden müssen, da andernfalls die Einhausung geöffnet werden müsste.

Von einem diesbezüglichen Stand der Technik geht die Erfindung grundsätzlich aus. Allerdings erfolgt ein Segmentieren des Behälters 10 derart, dass ein autarkes System zum Abdecken des Behälters 10 ungeachtet des sukzessiven Zerlegens zur Verfügung steht und somit gesonderte Hebewerkzeuge nicht benötigt werden. Gleichzeitig soll auch bei engen Raumverhältnissen ein problemloses Entfernen der Segmente mittels eines insbesondere in der lufttechnischen Einhausung angeordneten Hebewerkzeugs ermöglicht werden.

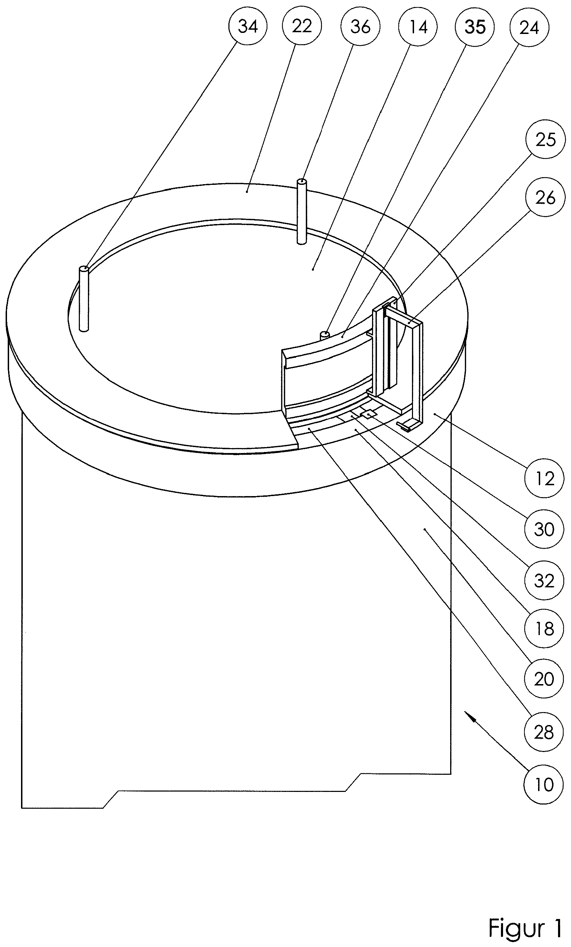

In Fig. 1 ist in Prinzipdarstellung ein Ausschnitt des Behälters 10 mit öffnungsseitig verlaufendem flanschartigen Rand 12 gezeichnet, der eine Öffnung umgibt, der von einer Abschirmabdeckung 14 abgedeckt ist, die eine Abschirmplatte in Kreisform ist und eine Umfangsgeometrie aufweist, die der Innengeometrie des Behälters 10 im Öffnungsbereich entsprechen sollte.

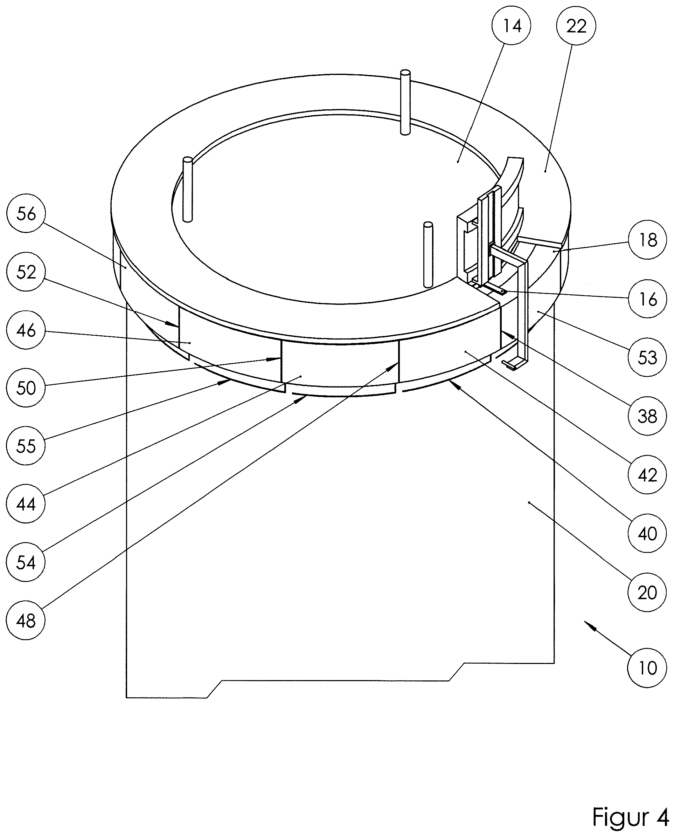

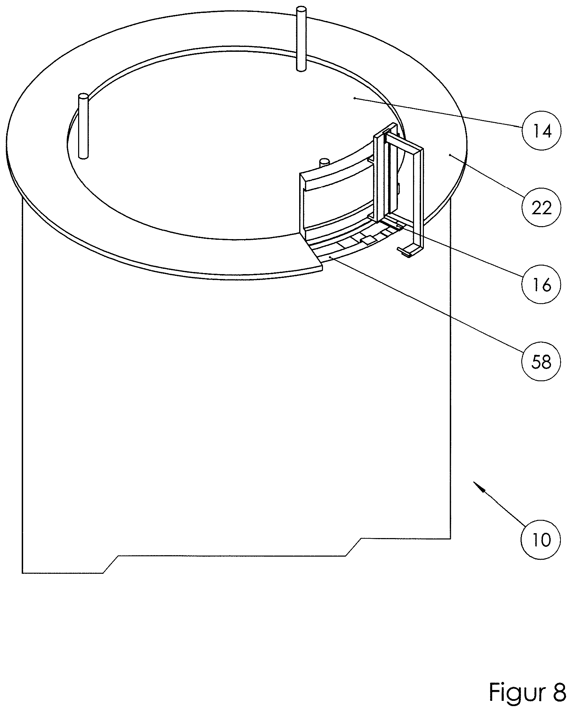

Wie sich insbesondere aus den Fig. 4 bis 8 ergibt, liegt die Abschirmplatte 14 über von dieser ausgehende streifenförmige Stege 16 auf dem Rand 18 des Behälters 10 auf.

Der Durchmesser der Abschirmplatte 14 ist kleiner als der Innendurchmesser des Behälters 10. Ungeachtet dessen erfolgt eine hinreichende Abschirmung dadurch, dass der Spalt zwischen Behälterinnenwandung 21 und Abschirmplatte 14 über eine Ringscheibe 22 abgedeckt ist, von der ein Werkzeugträger 24 für ein Zerlegewerkzeug 26 ausgeht. Die Ringscheibe 22 ist drehbar auf der Abschirmplatte 14 befestigt.

Wie sich aus der zeichnerischen Darstellung ergibt, ist die Breite der Ringscheibe 22 derart gewählt, dass diese außenseitig im Wesentlichen fluchtend zur Umfangsfläche des Randes 12 verlaufen kann, gleichzeitig die Abschirmplatte 14 peripher mit Ausnahme eines Ausschnitts 28 überlappt, in dessen Bereich sich der Werkzeugträger 24 für das Zerlegewerkzeug 26 befindet.

Somit ist nur ein kleiner Spalt zwischen Umfangswandung 20 des Behälters 10 und Innenraum des Behälters 10 vorhanden, der jedoch nicht dazu führt, dass eine Kontaminationsausbreitung auftreten kann.

Des Weiteren erkennt man in Fig. 1 Auflager 30, die gekröpfte Abschnitte von Balken 32 sind, die eine Traverse bilden. Im Ausführungsbeispiel sind drei Balken 32 vorgesehen, die miteinander verbunden sind, wobei die Verbindung zwischen diesen von der Längsachse des Behälters 10 geschnitten sein kann. Die einzelnen Balken 32 sind mit einem Antrieb verbunden - im Ausführungsbeispiel über Zylinder -, deren äußere Gehäuse 34, 35, 36, prinzipiell angedeutet sind.

Drei Balken 32 mit drei Auflagern 30 - entsprechend drei Zylinder - sind insgesamt um 120° versetzt vorgesehen, mittels derer die Abschirmplatte 14 und damit die Ringscheibe 22 mit dem Zerlegewerkzeug 26 sukzessiv abgesenkt und auf durch Entfernen von Segmenten gebildete Ränder der Behälterwandung 20 aufgesetzt werden, wie dies nachstehend erläutert wird.

Es wird folglich eine Absenkeinrichtung zur Verfügung gestellt, die von der Abschirmplatte 14 ausgeht und somit ein autarkes System zum Abdecken des Behälterinneren in Abhängigkeit vom Fortschritt des Zerlegens des Behälters 10 bietet.

Bei dem Zerlegewerkzeug 26 kann es sich um ein mechanisches oder thermisch arbeitendes Werkzeug handeln, wie Autogenschneidwerkzeug, Plasmaschneidwerkzeug oder spanabhebendes Werkzeug, wie z.B. Säge, um nur beispielhaft Zerlegewerkzeuge zu nennen. Das Zerlegewerkzeug 26 ist entsprechend der zeichnerischen Darstellung in axialer, radialer und in Umfangsrichtung verstellbar, um im gewünschten Umfang Trennschnitte durchzuführen. Entsprechend ist das Werkzeug 26 zum einen entlang des Werkzeugträgers 24 verstellbar. Zum anderen geht vom Werkzeugträger 24 eine Halterung 25 aus, um das Zerlegewerkzeug 26 axial verstellen zu können, wie dies den Figuren selbsterklärend zu entnehmen ist.

Ist die Absenkeinrichtung, d.h. die Balken 32, mit den Auflagern 30 über Zylinder in Längsachsenrichtung des Behälters 10 verstellbar, so sind auch andere Antriebe, wie Spindel oder Seilzug, möglich.

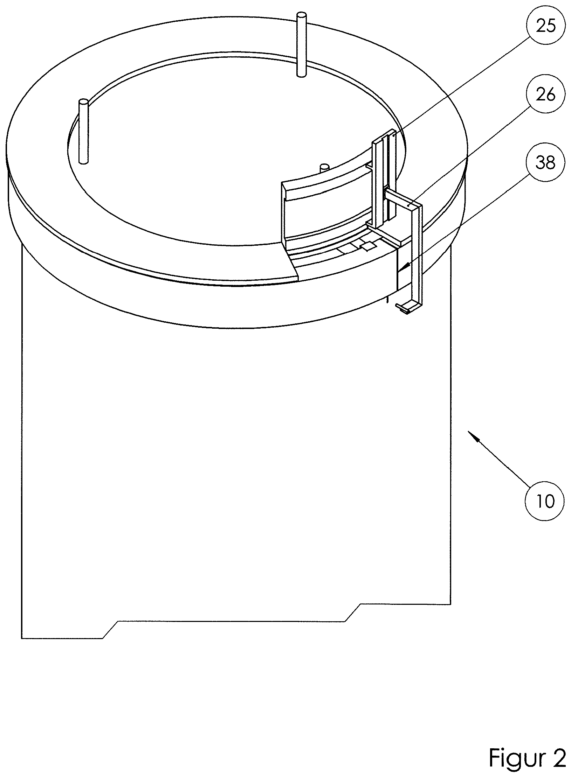

In Fig. 1 ist der Zustand dargestellt, bevor das Segmentieren beginnt. Das Zerlegewerkzeug 26 befindet sich in einer Ausgangsstellung, in der bei Aktivieren des Zerlegewerkzeugs 26 ein vertikaler Schnitt ausgehend vom oberen Rand 18 eingebracht werden soll, wie dies der Fig. 2 zu entnehmen ist. Man erkennt einen Axial (Vertikal)- oder Längstrennschnitt 38. Auch ist ersichtlich, dass das Zerlegewerkzeug 26 in Längsachsenrichtung des Behälters 10 - in den Figuren nach unten - in der Halterung 25 verstellt worden ist.

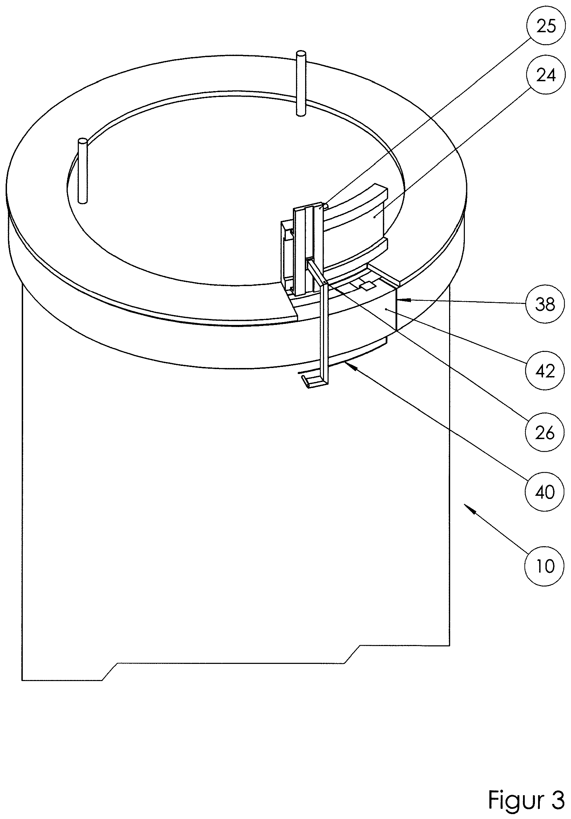

In der Fig. 3 ist nach der Durchführung des Axial- oder Längstrennschnitts 38 ein Boden- oder Horizontaltrennschnitt 40 in Umfangsrichtung durchgeführt worden, in dem bei unveränderter Position des Zerlegewerkzeugs 26 in der Halterung 25 dieses in dem Werkzeugträger 24 in der zeichnerischen Darstellung im Uhrzeigersinn verstellt worden ist. Die Führungsbahn des Trägers 24 weist dabei eine Krümmung auf, die der des Behälters 10 entspricht.

Nach Durchführung des Boden- oder Horizontalschnitts 40 wird zur Herstellung eines Segments 42 ein in Richtung des Rands 18 verlaufender zweiter Axialtrennschnitt durchgeführt. Entsprechend werden eine Vielzahl von Segmenten gebildet, von denen einige mit den Bezugszeichen 42, 44, 46 gekennzeichnet sind, wie in Fig. 4 dargestellt.

Die entsprechenden Segmente 42, 44, 46 sind sowohl von Längs- oder Axialtrennschnitten als auch von Boden- oder Horizontaltrennschnitten begrenzt, die mit den Bezugszeichen 38, 48, 50, 52 für die Axialtrennschnitte und mit den Bezugszeichen 40, 54, 55 für die Horizontal- oder Bodentrennschnitte gekennzeichnet sind.

Im Ausführungsbeispiel verlaufen im Abstand von 120° weitere Segmente 53, 56, die gleiche Abmessungen wie die Segmente 42, 44, 46 aufweisen können, in denen zunächst ein Boden- oder Horizontaltrennschnitt nicht oder nicht vollständig eingebracht worden ist, so dass diese Segmente 53, 56 weiterhin fest mit der Umfangswandung 20 des Behälters 10 verbunden sind.

Unabhängig hiervon sollten bei der Ausbildung sowohl der Axial- als auch der Bodentrennschnitte die Trennschnitte zunächst derart durchgeführt werden, dass bereichsweise eine Verbindung untereinander und zu der Umfangswandung 20 verbleibt, so dass beim Durchführen der Trennschnitte nicht die Gefahr besteht, dass Segmente verschoben werden können.

Die in Fig. 4 gezeigten Segmente 42, 44, 46, 53, 56 bilden mit anderen Segmenten in derselben Ebene insgesamt einen Hohlzylinderring. Um diesen zu entfernen, werden zunächst die Teilaxial- und Horizontaltrennschnitte 38, 48, 50, 52, bzw. 40, 54, 55 aufweisenden Segmente 42, 44, 46 vollständig von der Behälterwandung 20 und den benachbarten Segmenten 53, 44 bzw. 46, 42 bzw. 44, 56 getrennt und sodann mittels eines Hebewerkzeugs entfernt. Hierzu wird der Ausschnitt 28 der Ringscheibe 22 auf das zu entfernende Segment ausgerichtet, um sodann den Trennschnitt für das Segment durchzuführen und das Segment vertikal anzuheben, sofern nicht zunächst ein radiales Verstellen erforderlich ist, nämlich in Bezug auf die Segmente, oberhalb derer die Auflager 30 (Fig. 1) bzw. Stege 16 (Fig. 4) verlaufen.

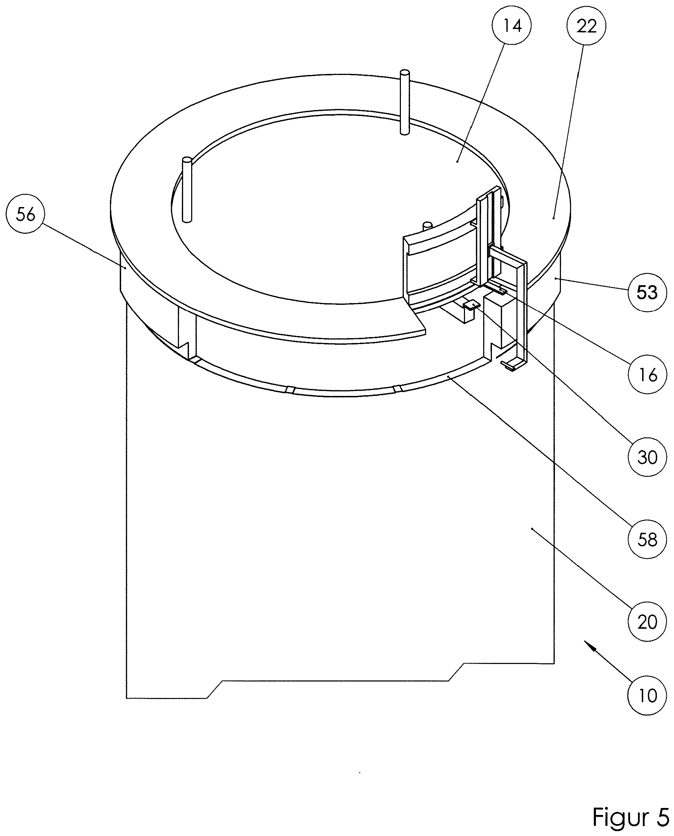

Auf die nicht vollständig freigeschnittenen als Stützsegmente zu bezeichnenden Segmente 53, 56 verbleibt die Abschirmplatte 14 mit dem Werkzeugträger 24, so dass problemlos die weiteren Segmente 42, 44, 46 entfernt werden können. Diese Situation ist in Fig. 5 dargestellt.

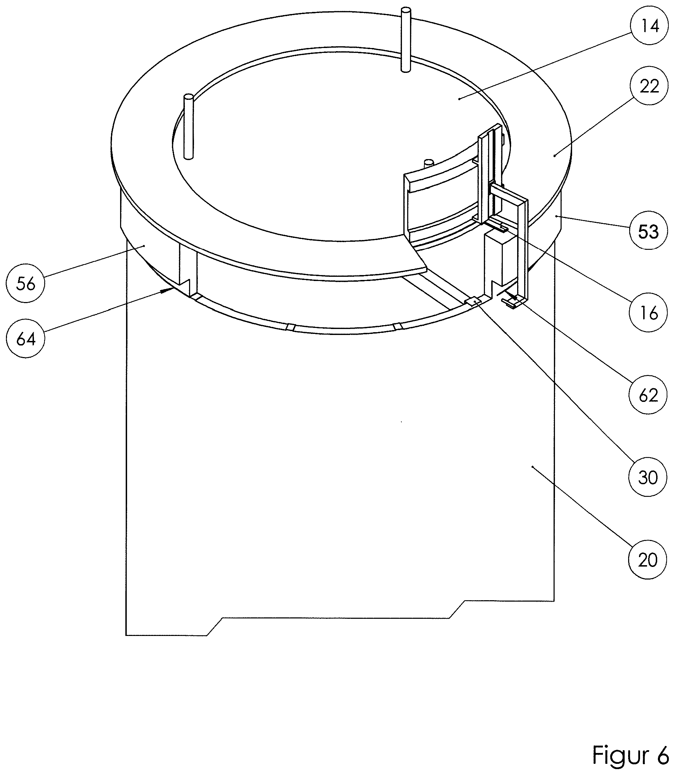

Nach Entfernen der freigeschnittenen Segmente 42, 44, 46 - entsprechende Segmente finden sich auch in dem nicht einsehbaren Bereich des Behälters 10 - wird die die Auflager 30 aufweisende Absenkeinrichtung aktiviert derart, dass die Auflager 30 abgesenkt und auf den Rand 58 abgestützt werden, die durch das Entfernen der freigeschnittenen Segmente 42, 44, 46 in der Umfangswandung 20 des Behälters 10 entstehen. Entsprechend abgesenkte Auflager 30 sind in der Fig. 6 erkennbar.

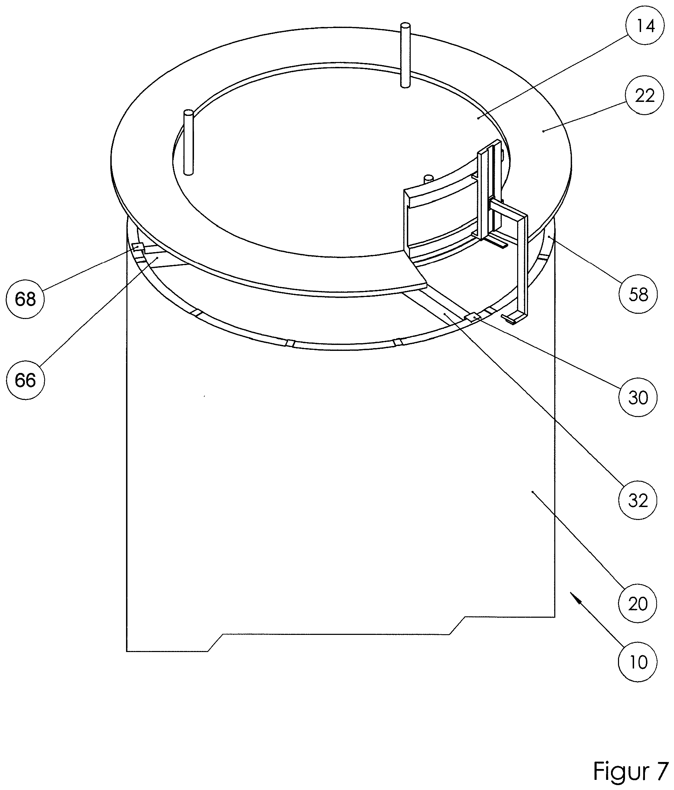

Durch Anheben der Abschirmplatte 14 und somit Außerkontaktbringen der stegförmigen Abstützungen 16 von den Stützsegmenten 53, 56 werden die Stützsegmente 53, 56 freigegeben und können somit entfernt werden. Dies ist der Fig. 7 zu entnehmen. Man erkennt die Balken 32, 66 mit den Auflagern 30, 68, die sich auf dem Rand 58 der Umfangswandung 20 des Behälters 10 abstützen.

Ist die Abschirmplatte 14 mit der Ringscheibe 22 auf dem Rand 58 abgestützt, wird die Ringscheibe 22 in Bezug auf den Ausschnitt 28 derart verstellt, dass die Stützsegmente 53, 56 bodenseitig von der Umfangswandung 20 getrennt werden, also ein Horizontalschnitt 62, 64 durchgeführt wird.

Sodann wird die Abschirmplatte 14 mit der zu dieser drehbar ausgebildeten Ringscheibe 22 mittels der Absenkeinrichtung abgesenkt, damit die stegförmigen Abstützungen 16 auf dem Rand 58 auflegbar sind und somit das zuvor erläuterte Procedere erneut durchgeführt werden kann, so dass sukzessiv aus Segmenten gebildete Hohlzylinderringe des Behälters 10 entfernt und somit dieser zerlegt werden kann.

## Patentansprüche

1. Anordnung zum Zerlegen eines eine Umfangswandung (20) und eine von dieser umgebene Öffnung aufweisenden Behälters (10), insbesondere einer kerntechnischen Anlage, vorzugsweise Reaktordruckbehälter, mit oberhalb der Öffnung angeordneter Abschirmabdeckung (14) sowie Zerlegewerkzeug (26) zum Schneiden von Segmenten (42, 44, 46, 53, 56) aus der Umfangswandung, wobei die Zerlegung derart erfolgt, dass sukzessiv eine Hohlzylinderringgeometrie aufweisende Bereiche der Umfangswandung in Segmente geschnitten und diese sodann entfernt werden, wobei nach Entfernen eines segmentierten die Hohlzylinderringgeometrie aufweisenden Bereichs ein Stirnrand (58) der verbleibenden Umfangswandung zur Verfügung steht,
**dadurch gekennzeichnet,**
**dass** die Abschirmabdeckung (14) eine Absenkeinrichtung (30, 32, 66, 68) zum sukzessiven Absenken der Abschirmabdeckung auf den jeweiligen zur Verfügung stehenden Stirnrand (58) aufweist.

2. Anordnung nach Anspruch 1,
**dadurch gekennzeichnet,**
**dass** die Absenkeinrichtung (30, 32, 66, 68) zumindest zwei Auflager (30, 68), vorzugsweise drei um 120° versetzt zueinander angeordnete Auflager, aufweist, über die die Abschirmabdeckung (14) abstützbar ist.

3. Anordnung nach Anspruch 1 oder 2,
**dadurch gekennzeichnet,**
**dass** die Auflager (30, 68) endseitige Abschnitte einer Traverse (32, 66) sind, die über zumindest einen Verstellmechanismus, wie Zylinder, Spindel, Seilwinde, zu der Abschirmabdeckung (14) verstellbar ist.

4. Anordnung vorzugsweise nach zumindest einem der vorhergehenden Ansprüche, **dadurch gekennzeichnet,**
**dass** auf der Außenseite der Abschirmabdeckung (14) ein drehbar zu der Abschirmabdeckung die Geometrie eines Kreisrings oder Kreisringabschnitts aufweisendes Scheibenelement (22) angeordnet ist, von dem das Zerlegewerkzeug (26) ausgeht, wobei die Abschirmabdeckung (14) vorzugsweise eine Kreisscheibengeometrie aufweist, über deren Umfangsrand radial vorstehend das Scheibenelement (22) verläuft.

5. Anordnung nach zumindest einem der vorhergehenden Ansprüche,
**dadurch gekennzeichnet,**
**dass** das Scheibenelement (22) einen Ausschnitt (28) aufweist, dessen in Kreisumfangsrichtung verlaufende Erstreckung größer als die Erstreckung eines Segments (42, 44, 46, 53, 56) in Kreisumfangsrichtung ist, wobei vorzugsweise die radiale Erstreckung des Ausschnitts (28) zumindest gleich oder zumindest in etwa gleich der radialen Erstreckung des Scheibenelements (22) außerhalb der Abschirmabdeckung (14) ist.

6. Anordnung nach zumindest einem der vorhergehenden Ansprüche,
**dadurch gekennzeichnet,**
**dass** entlang der inneren Begrenzung des Ausschnitts (28) ein Werkzeugträger (24) für das Zerlegewerkzeug (26) angeordnet ist.

7. Anordnung nach zumindest einem der vorhergehenden Ansprüche,
**dadurch gekennzeichnet,**
**dass** das Zerlegewerkzeug (26) ein mechanisch oder thermisch arbeitendes Zerlegewerkzeug ist, wie Autogenschneidwerkzeug, Plasmaschneidwerkzeug, spanabhebendes oder schleifendes Werkzeug.

8. Anordnung nach zumindest einem der vorhergehenden Ansprüche,
**dadurch gekennzeichnet,**
**dass** die eine Scheibengeometrie aufweisende Abschirmabdeckung (14) einen Durchmesser aufweist, der geringer als der Durchmesser der Öffnung des Behälters (10) ist.

9. Anordnung nach zumindest einem der vorhergehenden Ansprüche,
**dadurch gekennzeichnet,**
**dass** das Scheibenelement (22) gegenüber der Abschirmabdeckung (14) über z. B. in einer Schiene des Scheibenelements geführte Rollenböcke oder andere geeignete Lagerung abgestützt ist.

10. Verfahren zum Zerlegen eines eine Umfangswandung (20) und eine von dieser umgebene Öffnung aufweisenden Behälters (10), insbesondere einer kerntechnischen Anlage, vorzugsweise Reaktordruckbehälter, mit oberhalb der Öffnung angeordneter Abschirmabdeckung (14) sowie Zerlegewerkzeug (26) zum Schneiden von Segmenten (42, 44, 46, 53, 56) aus der Umfangswandung, wobei die Zerlegung derart erfolgt, dass sukzessiv eine Hohlzylinderringgeometrie aufweisende Bereiche der Umfangswandung in Segmente geschnitten und diese sodann entfernt werden, wobei nach Entfernen eines segmentierten die Hohlzylinderringgeometrie aufweisenden Bereichs ein Stirnrand (58) der verbleibenden Umfangswandung zur Verfügung steht, umfassend die Verfahrensschritte:
- Schneiden von Segmenten (42, 44, 46, 53, 56) bei auf der Öffnung angeordneter Abschirmabdeckung (14) eines ersten eine Hohlzylinderringgeometrie aufweisenden Bereichs derart, dass zwischen Segmenten in Längsrichtung des Behälters (10) verlaufende Axial- oder Längstrennschnitte (38, 48, 50, 52) und mit Ausnahme für zumindest zwei Stützsegmente bildende Segmente (53, 56) bodenseitig verlaufende Horizontal- oder Bodentrennschnitte (40, 54, 55) ausgebildet werden,
- Entfernen der von Axial- oder Längstrennschnitten und Horizontal- oder Bodentrennschnitten begrenzten Segmente (42, 44, 46, 53, 56) bei bleibender Abstützung der Abschirmabdeckung (14) auf den zumindest zwei verbleibenden Stützsegmenten,
- Abstützen der Abschirmabdeckung auf den durch das Entfernen der Segmente gebildeten Stirnrand (58) der Umfangswandung (20) mittels von der Abschirmabdeckung ausgehender Absenkeinrichtung (30, 32, 66, 68),
- Ausbilden von Horizontal- oder Bodentrennschnitten in den Stützsegmenten,
- Entfernen der Stützsegmente und
- Absenken der Abschirmabdeckung mittels der Absenkeinrichtung auf den Stirnrand.

11. Verfahren nach Anspruch 10,
**dadurch gekennzeichnet,**
**dass** zur Ausbildung der Segmente (42, 44, 46, 53, 56) zunächst Axial- oder Längstrennschnitte (38, 48, 50, 52) und/oder Horizontal- oder Bodentrennschnitte (40, 54, 55) teilweise durchgeführt und anschließend verbleibende Bereiche zwischen den Segmenten und der Umfangswandung (20) durchtrennt werden.

12. Verfahren nach Anspruch 11,
**dadurch gekennzeichnet,**
**dass** die verbleibenden Bereiche in Eckbereichen der zu schneidenden Segmente (42, 44, 46, 53, 56) vorgesehen werden.

13. Verfahren nach zumindest einem der Ansprüche 10 bis 12,
**dadurch gekennzeichnet,**
**dass** Auflager (30, 68) der Absenkeinrichtung den Stirnrand (58) der Umfangswandung (20) über eine radiale Erstreckung kontaktieren, die geringer als Breite des Stirnrands ist.

14. Verfahren nach zumindest einem der Ansprüche 10 bis 13,
**dadurch gekennzeichnet,**
**dass** zum Entfernen der Segmente (42, 44, 46, 53, 56) diese entsprechend der kontaktierenden radialen Erstreckung mittels eines Hebewerkzeugs zunächst radial verstellt und sodann entlang Längsachse des Behälters (10) angehoben werden.

15. Verfahren nach zumindest einem der Ansprüche 10 bis 14,
**dadurch gekennzeichnet,**
**dass** die Segmente (42, 44, 46, 53, 56) durch einen Ausschnitt (28) eines Ringscheibenelements (22) angehoben werden, von dem das Zerlegewerkzeug (26) ausgeht, wobei das Ringscheibenelement drehbar zu der Abschirmabdeckung (14) angeordnet ist und über diese radial vorsteht.

## Claims

1. An arrangement for dismantling a container (10), in particular of a nuclear plant, preferably a reactor pressure vessel, which comprises a circumferential wall (20) and an opening surrounded by said wall and which has a screening cover (14) situated above the opening, and a dismantling tool (26) for cutting segments (42, 44, 46, 53, 56) out of the circumferential wall, wherein the dismantling takes place in such a way that regions of the circumferential wall which have a hollow cylindrical ring geometry are successively cut into segments and these segments are then removed, wherein, after a segmented region having the hollow cylindrical ring geometry has been removed, an end edge (58) of the remaining circumferential wall is available,
**characterized in that**
the screening cover (14) comprises a lowering device (30, 32, 66, 68) for successively lowering the screening cover onto the respective available end edge (58).

2. The arrangement according to claim 1,
**characterized in that**
the lowering device (30, 32, 66, 68) comprises at least two supports (30, 68), preferably three supports offset by 120° with respect to another, which can support the screening cover (14).

3. The arrangement according to claim 1 or 2,
**characterized in that**
the supports (30, 68) are end sections of a cross-member (32, 66) which is adjustable with respect to the screening cover (14) at least by means of an adjustment mechanism, such as a cylinder, spindle, hoist.

4. The arrangement preferably according to at least any one of the preceding claims, **characterized in that**
a disc element (22), rotatable with respect to the screening cover and having the geometry of an annular ring or an annular ring segment, from which the dismantling tool (26) extends, is situated at the outside of the screening cover (14), wherein the screening cover (14) preferably has a circular disc geometry with the disc element (22) radially protruding over its circumferential edge.

5. The arrangement according to at least any one of the preceding claims,
**characterized in that**
the disc element (22) comprises a cutout (28) the extension of which in the circumferential direction is greater than the extension of a segment (42, 44, 46, 53, 56) in the circumferential direction, wherein preferably the radial extension of the cutout (28) is at least equal or at least approximately equal to the radial extension of the disc element (22) outside the screening cover (14).

6. The arrangement according to at least any one of the preceding claims,
**characterized in that**
a tool carrier (24) for the dismantling tool (26) is situated along the inner boundary of the cutout (28).

7. The arrangement according to at least any one of the preceding claims,
**characterized in that**
the dismantling tool (26) is a mechanically or thermally operating dismantling tool, such as an oxy-fuel cutting tool, a plasma cutting tool, a machining or grinding tool.

8. The arrangement according to at least any one of the preceding claims,
**characterized in that**
the screening cover (14) having a disc geometry has a diameter which is smaller than the diameter of the opening of the container (10).

9. The arrangement according to at least any one of the preceding claims,
**characterized in that**
the disc element (22) is supported with respect to the screening cover (14), for example, by roller blocks guided in a track of the disc element or another suitable support.

10. A method for dismantling a container (10), in particular of a nuclear plant, preferably a reactor pressure vessel, which comprises a circumferential wall (20) and an opening surrounded by said wall and which has a screening cover (14) situated above the opening, and a dismantling tool (26) for cutting segments (42, 44, 46, 53, 56) out of the circumferential wall, wherein the dismantling takes place in such a way that regions of the circumferential wall which have a hollow cylindrical ring geometry are successively cut into segments and these segments are then removed, wherein, after a segmented region having the hollow cylindrical ring geometry has been removed, an end edge (58) of the remaining circumferential wall is available, comprising the following method steps:
- cutting segments (42, 44, 46, 53, 56) with the screening cover (14) situated on the opening of a first region having a hollow cylinder ring geometry such that axial or longitudinal separating cuts (38, 48, 50, 52) extending in the longitudinal direction of the container (10) and, with the exception for at least two segments (53, 56) forming support segments, horizontal or bottom separating cuts (40, 54, 55) extending at the bottom are formed between segments,
- removing the segments (42, 44, 46, 53, 56) confined by axial or longitudinal and horizontal and bottom separating cuts with the support of the screening cover (14) on the at least two remaining support segments being maintained,
- supporting the screening cover on the end edge (58) of the circumferential wall (20) formed by removal of the segments by means of the lowering device (30, 32, 66, 68) extending from the screening cover,
- forming horizontal or bottom separating cuts in the support segments,
- removing the support segments, and
- lowering the screening cover onto the end edge by means of the lowering device.

11. The method according to claim 10,
**characterized in that**
in order to form the segments (42, 44, 46, 53, 56), initially axial or longitudinal separating cuts (38, 48, 50, 52) and/or horizontal or bottom separating cuts (40, 54, 55) are partially performed and subsequently remaining regions between the segments and the circumferential wall (20) are cut.

12. The method according to claim 11,
**characterized in that**
the remaining regions are provided in corner regions of the segments (42, 44, 46, 53, 56) to be cut.

13. The method according to at least any one of claims 10 to 12,
**characterized in that**
supports (30, 68) of the lowering device contact the end edge (58) of the circumferential wall (20) over a radial extension which is smaller than the width of the end edge.

14. The method according to at least any one of claims 10 to 13,
**characterized in that**
in order to remove the segments (42, 44, 46, 53, 56), said segments are initially radially adjusted according to the contacting radial extension by means of a lifting device and then lifted along the longitudinal axis of the container (10).

15. The method according to at least any one of claims 10 to 14,
**characterized in that**
the segments (42, 44, 46, 53, 56) are lifted through a cutout (28) of an annular disc element (22) from which the dismantling tool (26) extends, wherein the annular disc element is rotatably disposed with respect to the screening cover (14) and protrudes radially beyond said cover.

## Revendications

1. Système pour démanteler un conteneur (10) présentant une paroi périphérique (20) et une ouverture entourée par celle-ci, en particulier d'une installation nucléaire, de préférence une cuve sous pression d'un réacteur, avec un couvercle de protection (14) disposé au-dessus de l'ouverture ainsi qu'un outil de démantèlement (26) pour découper des segments (42, 44, 46, 53, 56) de la paroi périphérique, sachant que le démantèlement s'effectue de telle sorte que des zones de la paroi périphérique présentant une géométrie en forme d'anneau cylindrique creux sont successivement découpés en segments, lesquels sont ensuite retirés, sachant qu'un bord frontal (58) de la paroi périphérique restante est disponible après le retrait d'une zone segmentée présentant la géométrie en forme d'anneau cylindrique creux,
**caractérisé en ce**
**que** le couvercle de protection (14) présente un dispositif d'abaissement (30, 32, 66, 68) pour abaisser successivement le couvercle de protection sur le bord frontal (58) respectif mis à disposition.

2. Système selon la revendication 1,
**caractérisé en ce**
**que** le dispositif d'abaissement (30, 32, 66, 68) présente au moins deux supports (30, 68), de préférence trois supports décalés de 120° les uns des autres, qui permettent au couvercle de protection (14) d'être soutenu.

3. Système selon la revendication 1 ou 2,
**caractérisé en ce**
**que** les supports (30, 68) sont des sections terminales d'une traverse (32, 66) qui sont réglables par rapport au couvercle de protection (14) via au moins un mécanisme de réglage, tel qu'un vérin, une broche, un treuil à câble.

4. Système de préférence selon au moins l'une des revendications précédentes, **caractérisé en ce**
**qu'**un élément en forme de disque (22) est disposé sur le côté extérieur du couvercle de protection (14) et présente la géométrie d'un anneau circulaire ou d'une section d'anneau circulaire rotatif par rapport au couvercle de protection, élément en forme de disque duquel part l'outil de démantèlement (26), sachant que le couvercle de protection (14) présente de préférence une géométrie en forme de disque circulaire, sur le bord périphérique duquel l'élément en forme de disque (22) s'étend radialement en saillie.

5. Système selon au moins l'une des revendications précédentes,
**caractérisé en ce**
**que** l'élément en forme de disque (22) présente une découpe (28), dont l'étendue dans la direction circonférentielle est supérieure à l'étendue d'un segment (42, 44, 46, 53, 56) dans la direction circonférentielle, sachant que l'étendue radiale de la découpe (28) est de préférence au moins égale ou au moins approximativement égale à l'étendue radiale de l'élément en forme de disque (22) à l'extérieur du couvercle de protection (14).

6. Système selon au moins l'une des revendications précédentes,
**caractérisé en ce**
**qu'**un porte-outil (24) pour l'outil de démantèlement (26) est disposé le long de la limite intérieure de la découpe (28).

7. Système selon au moins l'une des revendications précédentes,
**caractérisé en ce**
**que** l'outil de démantèlement (26) est un outil de démantèlement mécanique ou thermique, tel qu'un outil de découpe autogène, un outil de découpe plasma, un outil d'enlèvement de copeaux ou un outil de meulage.

8. Système selon au moins l'une des revendications précédentes,
**caractérisé en ce**
**que** le couvercle de protection (14) présentant une géométrie en forme de disque présente un diamètre qui est inférieur au diamètre de l'ouverture du conteneur (10).

9. Système selon au moins l'une des revendications précédentes,
**caractérisé en ce**
**que** l'élément en forme de disque (22) est appuyé contre le couvercle de protection (14) via par ex. des supports à rouleaux guidés dans un rail de l'élément en forme de disque ou d'un autre support approprié.

10. Procédé pour démanteler un conteneur (10) présentant une paroi périphérique (20) et une ouverture entourée par celle-ci, en particulier d'une installation nucléaire, de préférence une cuve sous pression d'un réacteur, avec un couvercle de protection (14) disposé au-dessus de l'ouverture ainsi qu'un outil de démantèlement (26) pour découper des segments (42, 44, 46, 53, 56) de la paroi périphérique, sachant que le démantèlement s'effectue de telle sorte que des zones de la paroi périphérique présentant une géométrie en forme d'anneau cylindrique creux sont successivement découpés en segments, lesquels sont ensuite retirés, sachant qu'un bord frontal (58) de la paroi périphérique restante est disponible après le retrait d'une zone segmentée présentant la géométrie en forme d'anneau cylindrique creux, comprenant les étapes suivantes :
- découpe de segments (42, 44, 46, 53, 56) lorsque le couvercle de protection (14) d'une première zone présentant une géométrie en forme d'anneau cylindrique creux est disposé sur l'ouverture de telle sorte qu'il y a une formation de découpes de séparation axiales ou longitudinales (38, 48, 50, 52) s'étendant entre les segments dans la direction longitudinale du conteneur (10) et de découpes de séparation horizontales ou de fond (40, 54, 55) s'étendant côté fond, à l'exception des segments (53, 56) formant au moins deux segments d'appui,
- enlèvement des segments (42, 44, 46, 53, 56) délimités par les découpes de séparation axiales ou longitudinales et des découpes de séparation horizontales ou de fond tout en conservant l'appui du couvercle de protection (14) sur au moins les deux segments d'appui restants,
- appui du couvercle de protection sur le bord frontal (58) de la paroi périphérique (20) formé par l'enlèvement des segments au moyen d'un dispositif d'abaissement (30, 32, 66, 68) partant du couvercle de protection,
- formation de découpes de séparation horizontales ou de fond dans les segments d'appui,
- enlèvement des segments d'appui et
- abaissement du couvercle de protection au moyen du dispositif d'abaissement sur le bord frontal.

11. Procédé selon la revendication 10,
**caractérisé en ce**
**que**, pour former les segments (42, 44, 46, 53, 56), des découpes de séparation axiales ou longitudinales (38, 48, 50, 52) et/ou des découpes de séparation horizontales ou de fond (40, 54, 55) sont d'abord partiellement effectuées, puis les zones restantes entre les segments et la paroi périphérique (20) sont ensuite démantelées.

12. Procédé selon la revendication 11,
**caractérisé en ce**
**que** des zones restantes sont prévues dans les zones d'angles des segments à découper (42, 44, 46, 53, 56).

13. Procédé selon au moins l'une des revendications 10 à 12,
**caractérisé en ce**
**que** des supports (30, 68) du dispositif d'abaissement sont en contact avec le bord frontal (58) de la paroi périphérique (20) sur une étendue radiale qui est inférieure à la largeur du bord frontal.

14. Procédé selon au moins l'une des revendications 10 à 13,
**caractérisé en ce**
**que**, pour retirer les segments (42, 44, 46, 53, 56), ces derniers sont tout d'abord déplacés radialement au moyen d'un outil de levage en fonction de l'étendue radiale en contact, puis sont soulevés le long de l'axe longitudinal du conteneur (10).

15. Procédé selon au moins l'une des revendications 10 à 14,
**caractérisé en ce**
**que** les segments (42, 44, 46, 53, 56) sont soulevés par une découpe (28) d'un élément en forme de disque annulaire (22), d'où part l'outil de démantèlement (26), sachant que l'élément en forme de disque annulaire est disposé en étant rotatif par rapport au couvercle de protection (14) et en dépassant radialement celui-ci.
